# EUROPÄISCHE PATENTSCHRIFT

(11) **EP 0 439 794 B1**
(45) Veröffentlichungstag und Bekanntmachung des Hinweises auf die Patenterteilung: **02.03.1994**
(21) Anmeldenummer: 90124903.7
(22) Anmeldetag: 20.12.1990
(51) Int. Cl.: F16F 1/36

(54) **Elastischer Federblock**
Elastic spring block
Bloc de ressort élastique

(30) Priorität: 23.12.1989 DE 3942904; 26.01.1990 DE 4002357
(43) Veröffentlichungstag der Anmeldung: 07.08.1991
(73) Patentinhaber: METZELER GIMETALL AG, D-80992 München (DE)
(72) Erfinder: Bitschkus, Horst, W-5411 Hilgert (DE); Steffens, Rainer, W-5416 Hillscheid (DE)
(74) Vertreter: Preissner, Nicolaus, Dipl.-Ing.

(56) Entgegenhaltungen:
- EP-A- 0 192 936
- EP-A- 0 320 608
- US-A- 3 402 924

## Beschreibung

Die Erfindung bezieht sich auf einen elastischen Federblock aus einem Elastomer, bei dem in mehreren Ebenen Scharen jeweils innerhalb einer Ebene paralleler und zumindest einseitig offener Kanäle kreisförmigen Querschnittes mit zumindest von Ebene zu Ebene unterschiedlicher Winkelorientierung vorgesehen sind.

Derartige Federblöcke sind beispielsweise aus der DE-C-723 596 bekannt. Durch die Anordnung derartiger Kanäle in entsprechend geformten Gummiblöcken ist es möglich, zur Erzielung einer bestimmten Federsteifigkeit, für die an sich ein Gummi geringerer Shore-Härte erforderlich wäre, ein bei der Herstellung und Verarbeitung leichter beherrschbaren Gummi höherer Shore-Härte zu verwenden. Darüber hinaus bewirkt die Anordnung derartiger Kanäle eine gute Dämmung von Körperschall, die durch den Impedanzsprung erzeugt wird, den die den Gummi durchdringenden Schallwellen bei Auftreffen auf einen derartigen Kanal erfahren.

Zur Verbesserung dieser Schalldämmwirkung ist es darüber hinaus aus der EP-B-0 192 936 bekannt, im Verlauf dieser Hohlkanäle kugelförmige Hohlräume von größerem Durchmesser als dem der Kanäle anzuordnen, die von den Kanälen angeschnitten werden. Die Herstellung derartiger Kanäle mit Kugelhohlräumen ist jedoch mit erheblichen Schwierigkeiten verbunden, da beim Entformen der entsprechenen Formkerne es oftmals zu einem Einreißen des Federblocks kommt, insbesondere wenn die Formkerne aus dem noch heißen Vulkanisat gezogen werden. Darüberhinaus nimmt die Federsteifigkeit des Blockes bei Zusammenpressen der Kanäle plötzlich mit ansteigender Kennlinie zu.

Der vorliegenden Erfindung liegt daher die Aufgabe zugrunde, einen elastischen Federblock der eingangs genannten Art zu schaffen, der eine optimale Dämmwirkung für Körperschall aufweist und der aber erheblich einfacher und ohne Gefahr einer Schädigung beim Entformen herstellbar ist und der darüberhinaus einen sanften Übergang zu höheren Federsteifigkeiten aufweist.

Zur Lösung dieser Aufgabe ist erfindungsgemäß vorgesehen, daß die einzelnen Kanäle von einem konstanten Grundquerschnitt aus innerhalb ihrer Längserstreckung mindestens eine venturiartige Verengung und anschließender Erweiterung mit stufenlosem, kontinuierlichen Übergang von einem Querschnitt auf den nächsten aufweisen.

Erfindungsgemäß ist es zur Lösung dieser Aufgabe auch möglich, daß die Kanäle innerhalb ihrer Längserstrekkung mindestens eine venturiartige Verengung und anschließender Erweiterung mit stufenlosem sich kontinuierlich änderndem Querschnitt ohne Kanalabschnitte konstanten Querschnittes aufweisen.

Mit einer solchen Gestaltung der Kanäle wird den einzelnen Formkernen beim Entfernen nur ein geringer Widerstand entgegengesetzt, insbesondere da diese Kanäle keine abrupten Querschnittsänderungen aufweisen, hinter denen Kernbereiche größeren Querschnittes hängenbleiben könnten.

Darüberhinaus kommen bei einem Zusammenpressen der Kanäle gegenüberliegende Wandungen zunächst nur punktweise miteinander in Berührung, so daß nach Überbrücken der Hohlkanäle die Federsteifigkeit stetig auf die Endsteifigkeit des massiven Blockes ansteigt.

Zur Anpassung der Federwirkung können die einzelnen Kanalscharen nicht nur in zueinander parallelen Ebenen, sondern in drei senkrecht zueinander gerichteten Ebenen verlaufen.

Ferner ist es zweckmäßig, wenn in unterschiedlichen Bereichen des Federblockes die Kanäle unterschiedliche Richtungsorientierungen aufweisen.

Dabei kann der Querschnitt der venturiartigen Verengungen etwa der Hälfte des größten Grundquerschnittes entsprechen.

Für spezielle Anwendungsfälle ist es zweckmäßig, wenn der Federblock in Form eines Hohlzylinders mit einem Verhältnis von Außen- zu Innendurchmesser von höchstens 2:1 ausgebildet ist und senkrecht zur Längserstreckung des Hohlzylinders verlaufende, je Ebene parallele Kanäle aufweist derart, daß zumindest die in einer achssenkrechten Ebene des Hohlzylinders angeordneten, radial außenliegenden Kanäle das Material des Hohlzylinders als Kreissehne voll durchdringen, und daß die mittleren, auf Schnittlinien mit der Innenwandung liegenden Kanäle stumpf im vorgegebenen Abstand von der Innenwandung des Hohlzylinders enden.

Dabei können die stumpf endenden Kanäle eine angenähert halbkugelförmige Stirnwand aufweisen.

Bezüglich des Verlaufs der Kanäle einer Ebene ist es auch möglich, daß die Kanalschar einer Ebene in einem von 90° abweichenden Winkel zur Kanalschar der benachbarten Ebene verläuft.

Anhand einer schematischen Zeichnung sind Aufbau und Funktionsweise von Ausführungsbeispielen nach der Erfindung näher erläutert. Dabei zeigen
- Fig. 1: einen Längsschnitt durch einen quaderförmigen Federblock mit entsprechenden Kanälen wechselnden Querschnittes in zueinander parallelen Ebenen,
- Fig. 2: einen Querschnitt durch einen solchen Federblock entsprechend der Schnittlinie II-II nach Fig. 1,
- Fig. 3: einen Längsschnitt durch einen Federblock mit in drei Ebenen verlaufenden Kanälen,
- Fig. 4: einen Querschnitt durch diesen Federblock entlang der Schnittlinie IV-IV nach Fig. 3,
- Fig. 5: einen Längsschnitt durch einen Federblock mit unterschiedlich gerichteten Kanälen in unterschiedlichen Bereichen des Federblocks,
- Fig. 6: eine Seitenansicht eines Federblockes in Form eines Hohlzylinders,
- Fig. 7: einen Querschnitt durch den Hohlzylinder nach Fig. 6 entsprechend der Schnittlinie VII-VII und
- Fig. 8: einen Querschnitt durch diesen Holhzylinder entsprechend der Schnittlinie VIII-VIII in einer anderen Ebene.

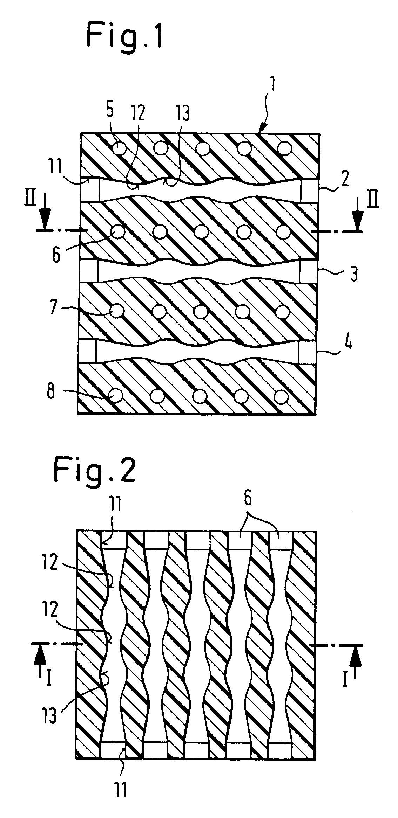

Wie man aus Fig. 1 und 2 ersieht, weist der quaderförmige Federblock 1 von etwa quadratischem Querschnitt entsprechend Fig. 2 in mehreren übereinanderliegenden Ebenen durchgehende Kanäle auf, und zwar gemäß Fig. 1 die Kanalscharen 2, 3 und 4 parallel zur Zeichenebene sowie die Kanalscharen 5, 6 und 7 und 8 senkrecht zur Zeichenebene.

Jeder dieser Kanäle - wie das anhand des linken Kanals in Fig. 2 erläutert sein soll - weist einen konstanten Grundquerschnitt 11 jeweils am Eintritt und am Austritt auf, von dem aus er auf seiner Längserstreckung mit einer oder mehreren venturiartigen Verengungen 12 versehen ist, zwischen denen jeweils wieder Erweiterungen 13 auf den ursprünglichen Kanalquerschnitt 11 vorgesehen sind. Bei dem dargestellten Ausführungsbeispiel weist dabei jeder Kanal drei solche venturiartigen Verengungen 12 auf, deren Querschnitt an der engsten Stelle etwa der Hälfte des größten Grundquerschnittes 11 entspricht.

Wesentlich dabei ist, daß der Übergang von einem Querschnitt auf den nächsten, z.B. von der Verengung 12 auf die Erweiterung 13 und wieder zurück zur nachfolgenden Verengung 12, stufenlos und kontinuierlich erfolgt, so daß Durchmessersprünge innerhalb des Kanals vermieden werden.

Mit einer solchen Gestaltung der Kanäle mit stufenlosen Querschnittsänderungen ist sichergestellt, daß bei der Entformung der die Kanäle zunächst ausfüllenden Kerne im Formnest nach der Vulkanisation das umgebende Material nur geringfügig aufgeweitet werden muß und daß durch die sanften Übergänge und fehlenden Kanten beim Ziehen der Kerne keine Materialstufen überwunden werden müssen, die zu einem Aufreißen des Federblockes führen können, was insbesondere beim Entformen aus dem noch heißen, gerade vulkanisierten Federblock geschehen kann.

Darüber hinaus erfolgt bei einem Zusammenpressen des Federblockes und damit der Kanäle zunächst eine punktweise Berührung der am nächsten einander gegenüberstehenden Kanalwandungen im Bereich der Verengungen 12, wobei entsprechend der gewählten Kontur stetig weitere Bereiche der Kanalwandungen miteinander in Berührung kommen. Damit erfolgt ein weicher Übergang von der Federsteifigkeit des Federblockes mit offenen Kanälen auf die Federsteifigkeit des massiven Gummifederblockes, d.h. auf den Federblock mit vollständig geschlossenen Kanälen.

Bezüglich der Größenzuordnung ist es zweckmäßig, wenn der Abstand der Kanäle einer Ebene voneinander etwa dem mittleren Durchmesser eines Kanals entspricht. In der Höhe können die einzelnen Kanalebenen so dicht wie möglich aneinandergrenzen, d.h. der Abstand sollte ein Mindestmaß von der Größe aufweisen, wie es für eine gesicherte Herstellung unter Beibehaltung einer geschlossenen Trennwandung zwischen benachbarten Kanalabschnitten größten Durchmessers erforderlich ist.

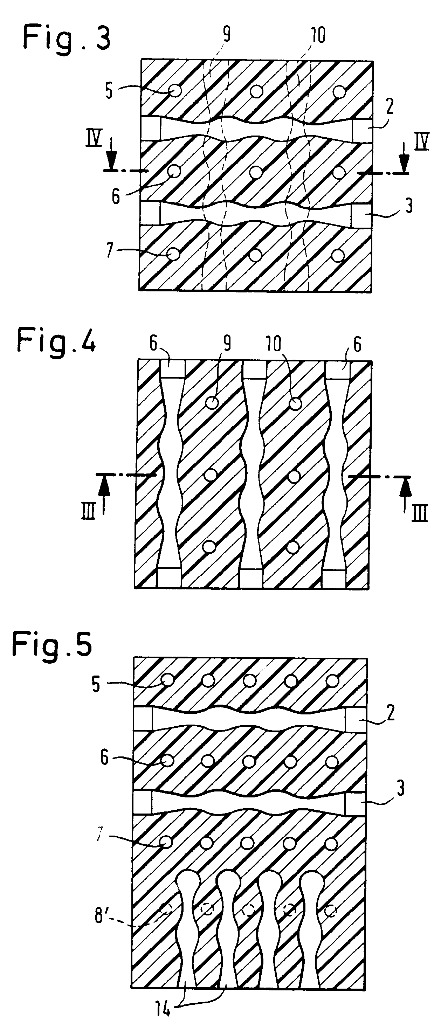

Neben einer Kanalanordnung in zueinander parallelen Ebenen, jedoch unter zueinander versetzten Richtungen, wie das in Fig. 1 und 2 gezeigt ist, ist es aber auch möglich, entsprechend dem Ausführungsbeispiel nach Fig. 3 und 4 Kanäle in drei senkrecht aufeinanderstehenden Ebenen anzuordnen. Dementsprechend sind neben den Kanalscharen 2 und 3, die horizontal und parallel zur Zeichenebene verlaufen, sowie den Kanalscharen 5, 6 und 7 senkrecht zur Zeichnungsebene noch weitere Kanalscharen 9 und 10 vorgesehen, die zwar ebenfalls parallel zur Zeichenebene, jedoch vertikal von oben nach unten verlaufen und jeweils zwischen den Horizontalkanälen ohne Berührung derselben den Federblock durchsetzen, vergl. Fig. 3.

Damit kann die Federsteifigkeit eines solchen Federblockes in allen drei Raumkoordinaten gezielt eingestellt und den jeweiligen Anforderungen angepaßt werden.

Neben einer homogenen Verteilung der drei Kanalarten und -richtungen ist es gemäß dem Ausführungsbeispiel nach Fig. 5 aber auch möglich, in unterschiedlichen Bereichen eines solches Federblockes unterschiedliche Kanalrichtungen vorzusehen. Wie sich hierzu aus der Figur ergibt, sind im oberen Bereich des Federblockes die horizontalen, sich kreuzenden Kanalscharen 2 und 3 bzw. 5, 6 und 7 vorgesehen, während im unteren Bereich des Federblockes vertikal verlaufende Kanäle 14 den Federblock durchdringen, die jedoch stumpf enden. Dabei können zwischen den vertikalen Kanälen 14 auch zusätzlich noch horizontale Kanäle 8' vorgesehen werden.

Mit einer solchen Anordnung kann in unterschiedlichen Höhen eine unterschiedliche Federsteifigkeit bzw. bei entsprechender Einbaulage eine Anpassung an unterschiedliche Belastungsrichtungen erfolgen.

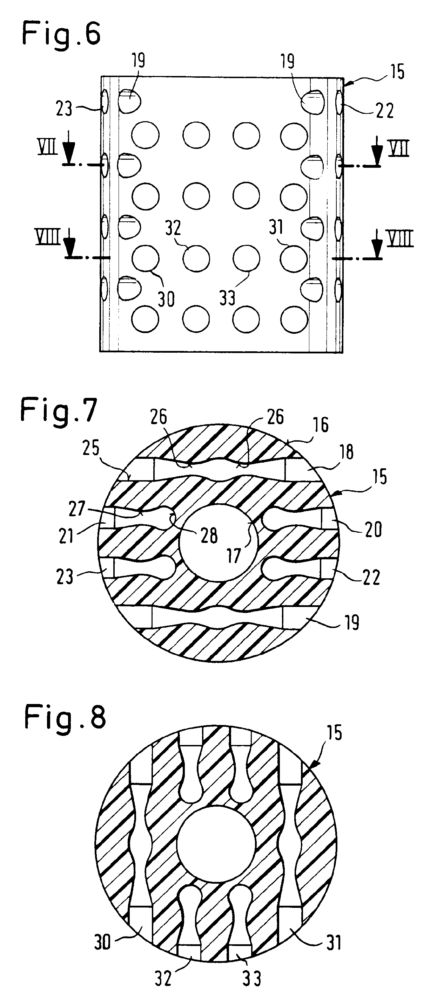

Ein spezieller Federblock, etwa in Form einer Zylinderfeder, ist in den Fig. 6, 7 und 8 dargestellt, wobei der Federblock in Form eines Hohlzylinders 15 mit einem Außendurchmesser 16 und einem Innendurchmesser 17 hergestellt ist. Das Verhältnis von Außen- zu Innendurchmesser eines solchen Hohlzylinders sollte dabei höchstens 2:1 betragen, um eine stabile Federwirkung zu erhalten.

Wie man aus den Querschnitten nach Fig. 7 und 8 entsprechend zweier übereinanderliegender Ebenen nach Fig. 6 ersieht, sind hierbei auch die Kanäle benachbarter Ebenen im Winkel von 90° zueinander versetzt. Dabei durchdringen die auf einem Zylinderdurchmesser radial außenliegenden Kanäle 18 und 19 das Material des Hohlzylinders 15 vollständig, während die radial innenliegenden Kanäle 20 und 21 bzw. 22 und 23, die praktisch auf Schnittlinien zur Innenwandung mit dem Innendurchmesser 17 liegen, stumpf im vorgegebenen Abstand von der Innenwandung des Hohlzylinders 15 enden.

Auch hierbei weisen die einzelnen Kanäle einen konstanten Grundquerschnitt 25 auf, von dem aus bei den durchgehenden Kanälen 18 und 19 zwei venturiartige Verengungen 26 vorgesehen sind, während bei den stumpf endenden Kanälen 20 bis 23 jeweils nur eine Verengung 27 und eine halbkugelförmige Stirnseite 28 am inneren Ende dieser Kanäle vorgesehen ist.

Die quer dazu liegenden Kanäle 30 und 31 bzw. 32 und 33 der benachbarten Ebene entsprechend Fig. 8 sind in gleicher Weise ausgebildet wie die der Ebene nach Fig. 7.

Auch bei diesem Ausfuhrungsbeispiel ist es möglich, daß entsprechend Fig. 6 parallel zur Längsachse verlaufende Kanäle vorgesehen sind, die von der unteren und/oder oberen Stirnseite des Federblockes ausgehen, so daß die beschriebenen, horizontal verlaufenden Kanäle sich nur über Teilbereiche des Hohlzylinders erstrecken.

Bei den dargestellten Ausführungsbeispielen sind die Kanäle zweier benachbarter Ebenen jeweils um 90° zueinander versetzt. Es ist aber auch jeder andere Winkel zueinander möglich. Auch können die Kanäle untereinander unterschiedliche Form und Gestaltung aufweisen, wenn nur das Grundprinzip eines sanften Überganges zwischen den unterschiedlichen Durchmessern zur leichten Entformung eingehalten ist.

## Patentansprüche

1. Elastischer Federblock (1) aus einem Elastomer, bei dem in mehreren Ebenen Scharen jeweils innerhalb einer Ebene paralleler und zumindest einseitig offener Kanäle (2-10; 14; 18-23; 30-33) kreisförmigen Querschnittes mit zumindest von Ebene zu Ebene unterschiedlicher Winkelorientierung vorgesehen sind, **dadurch gekennzeichnet, daß** die einzelnen Kanäle (2-10; 14; 18-23; 30-33) von einem konstanten Grundquerschnitt (11; 25) aus innerhalb ihrer Längserstreckung mindestens eine venturiartige Verengung (12; 26; 27) und anschließender Erweiterung (13; 28) mit stufenlosem, kontinuierlichen Übergang von einem Querschnitt auf den nächsten aufweisen.

2. Elastischer Federblock (1) aus einem Elastomer, bei dem in mehreren Ebenen Scharen jeweils innerhalb einer Ebene paralleler und zumindest einseitig offener Kanäle (2-10; 14; 18-23; 30-33) kreisförmigen Querschnittes mit zumindest von Ebene zu Ebene unterschiedlicher Winkelorientierung vorgesehen sind, dadurch gekennzeichnet, daß die Kanäle (14) innerhalb ihrer Längerstreckung mindestens eine venturiartige Verengung und anschließender Erweiterung mit stufenlosem, sich kontinuierlich änderndem Querschnitt ohne Kanalabschnitte konstanten Querschnittes aufweisen.

3. Elastischer Federblock nach Anspruch 1 oder 2, dadurch gekennzeichnet, daß die einzelnen Kanalscharen (2, 3; 5, 6, 7; 9, 10) in drei senkrecht zueinander gerichteten Ebenen verlaufen.

4. Elastischer Federblock nach einem der Ansprüche 1 bis 3, dadurch gekennzeichnet, daß in unterschiedlichen Bereichen des Federblockes die Kanäle unterschiedliche Richtungsorientierung aufweisen.

5. Elastischer Federblock nach mindestens einem der Ansprüche 1 bis 4, dadurch gekennzeichnet, daß der Federblock in Form eines Hohlzylinders (15) mit einem Verhältnis von Außen- zu Innendurchmesser (16, 17) von höchstens 2:1 ausgebildet ist und senkrecht zur Längserstreckung des Hohlzylinders (15) verlaufende, je Ebene parallele Kanäle (18-23; 30-33) aufweist derart, daß zumindest die in einer achssenkrechten Ebene des Hohlzylinders (15) angeordneten, radial außenliegenden Kanäle (18, 19; 30, 31) das Material des Hohlzylinders (15) als Kreissehne voll durchdringen, und daß die mittleren, auf Schnittlinien mit der Innenwandung liegenden Kanäle (20-23; 32, 33) stumpf im vorgegebenen Abstand vor der Innenwandung des Hohlzylinders (15) enden.

6. Elastischer Federblock nach Anspruch 5, dadurch gekennzeichnet, daß die stumpf endenden Kanäle (20-23; 32, 33) eine angenähert halbkugelförmige Stirnwand (28) aufweisen.

7. Elastischer Federblock nach einem der Ansprüche 1 bis 6, dadurch gekennzeichnet, daß der Querschnitt der venturiartigen Verengungen (12) etwa der Hälfte des größten Grundquerschnittes (11) entspricht.

8. Elastischer Federblock nach einem der Ansprüche 1 bis 7, dadurch gekennzeichnet, daß der Abstand der Kanäle (2-10; 14; 18-23; 30-33) einer Ebene voneinander etwa dem mittleren Durchmesser eines Kanals entspricht.

9. Elastischer Federblock nach einem der Ansprüche 1 bis 8, dadurch gekennzeichnet, daß die Kanalschar einer Ebene in einem von 90° abweichenden Winkel zur Kanalschar der benachbarten Ebene verläuft.

## Claims

1. Elastic spring block (1) made of an elastomer, in which in a plurality of planes systems of channels (2-10; 14; 18-23; 30-33) of circular cross-section, which are open at at least one end and are parallel in each case within a plane, are provided with the angular orientation differing at least from plane to plane, characterized in that proceeding from a constant basic cross-section (11; 25) the individual channels (2-10; 14; 18-23; 30-33) have within their longitudinal extension at least one venturi-like constriction (12; 26; 27) and adjoining widening (13; 28) with a stepless continuous transition from one cross-section to the next.

2. Elastic spring block (1) made of an elastomer, in which in a plurality of planes systems of channels (2-10; 14; 18-23; 30-33) of circular cross-section, which are open at at least one end and are parallel in each case within a plane, are provided with the angular orientation differing at least from plane to plane, characterized in that the channels (14) have within their longitudinal extension at least one venturi-like constriction and adjoining widening with a stepless, continuously varying cross-section without channel portions of constant cross-section.

3. Elastic spring block according to claim 1 or 2, characterized in that the individual channel systems (2, 3; 5, 6, 7; 9, 10) extend in three planes directed at right angles to one another.

4. Elastic spring block according to one of claims 1 to 3, characterized in that in different regions of the spring block the channels have a different directional orientation.

5. Elastic spring block according to at least one of claims 1 to 4, characterized in that the spring block takes the form of a hollow cylinder (15) with a ratio of external to internal diameter (16, 17) of at most 2:1 and has channels (18-23; 30-33), which extend at right angles to the longitudinal extension of the hollow cylinder (15) and are parallel in each plane, in such a manner that at least the radially outer-lying channels (18, 19; 30, 31) disposed in a plane perpendicular to the axis of the hollow cylinder (15) fully penetrate the material of the hollow cylinder (15) as a chord and the middle channels (20-23; 32, 33) lying along lines of intersection with the inner wall terminate bluntly at a preset distance from the inner wall of the hollow cylinder (15).

6. Elastic spring block according to claim 5, characterized in that the blunt-ended channels (20-23; 32, 33) have an approximately semi-spherical end wall (28).

7. Elastic spring block according to one of claims 1 to 6, characterized in that the cross-section of the venturi-like constrictions (12) corresponds to approximately half the greatest basic cross-section.

8. Elastic spring block according to one of claims 1 to 7, characterized in that the distance of the channels (2-10; 14; 18-23; 30-33) of a plane from one another corresponds approximately to the mean diameter of a channel.

9. Elastic spring block according to one of claims 1 to 8, characterized in that the channel system of a plane extends at an angle other than 90° to the channel system of the adjacent plane.

## Revendications

1. Bloc (1) élastique formant ressort constitué d'un élastomère, dans lequel il est prévu, dans plusieurs plans, des familles de canaux (2-10;14,18-23;30-33) qui sont chacun parallèle dans un plan, qui sont ouverts au moins d'un côté et qui ont une section transversale circulaire en ayant au moins une orientation angulaire différente d'un plan à l'autre, caractérisé en ce que les divers canaux (2-10; 14; 18-23; 30-33) comportent, à partir d'une section transversale (11; 25) de base constante, sur leur étendue en longueur, au moins un rétrécissement (12; 26; 27) de type à venturi et ensuite un élargissement (13; 28) avec passage continu sans dénivellation d'une section transversale à la suivante.

2. Bloc (1) élastique formant ressort constitué d'un élastomère, dans lequel il est prévu, dans plusieurs plans, des familles de canaux (2-10;14,18-23;30-33) qui sont chacun parallèle dans un plan, qui sont ouverts au moins d'un côté et qui ont une section transversale circulaire en ayant au moins une orientation angulaire différente d'un plan à l'autre, caractérisé en ce que les canaux comportent, sur leur étendue en longueur, au moins un rétrécissement de type à venturi et ensuite un élargissement de section transversale variant d'une manière continue sans dénivellation, mais sans tronçon de canal de section transversale constante.

3. Bloc élastique formant ressort suivant la revendication 1 ou 2, caractérisé en ce que les divers familles (2,3; 5,6,7; 9,10) de canaux s'étendent dans trois plans perpendiculaires entre eux.

4. Bloc élastique formant ressort suivant l'une des revendications 1 à 3, caractérisé en ce que, dans des parties différentes du bloc formant ressort, les canaux ont des orientations différentes.

5. Bloc élastique formant ressort suivant l'une au moins des revendications 1 à 4, caractérisé en ce que le bloc formant ressort est constitué sous la forme d'un cylindre (15) creux ayant un rapport du diamètre extérieur (16) au diamètre intérieur (17) de 2:1 ou plus et comporte des canaux (18-23; 30-33) respectivement parallèles à un plan et s'étendant perpendiculairement à la direction en longueur du cylindre (15) creux de façon qu'au moins les canaux (18,19; 30,31) disposés radialement à l'extérieur et dans un plan, perpendiculaire à l'axe, du cylindre (15) creux traversent entièrement le matériau du cylindre (15) creux sous la forme de cordes de cercle, et en ce que les canaux (20-23; 32, 33) médians se trouvant sur les lignes de coupe avec la paroi intérieure se terminent en étant borgnes à une distance prescrite de la paroi intérieure du cylindre (15) creux.

6. Bloc élastique formant ressort suivant la revendication 5, caractérisé en ce que les canaux (20-23; 32, 33) qui se terminent de manière borgne ont une paroi frontale (8) de forme sensiblement hémisphérique.

7. Bloc élastique formant ressort suivant l'une des revendications 1 à 6, caractérisé en ce que la section transversale des rétrécissements (12) de type à venturi correspond à peu près à la moitié de la section transversale (11) de base la plus grande.

8. Bloc élastique formant ressort suivant l'une des revendications 1 à 7, caractérisé en ce que la distance entre les canaux (2-10; 14; 18-23; 30-33) d'un plan à un autre correspond à peu près au diamètre moyen d'un canal.

9. Bloc élastique formant ressort suivant la revendication 1 à 8, caractérisé en ce que la famille de canaux dans un plan fait un angle différent de 90° avec la famille de canaux du plan voisin.
